# EUROPEAN PATENT APPLICATION

(11) **EP 0 609 607 A1**
(43) Date of publication of application: **10.08.1994**
(21) Application number: 93307516.0
(22) Date of filing: 22.09.1993
(51) Int. Cl.: G02F 1/1333

(54) **Colour filters for a liquid crystal display**

(30) Priority: 02.02.1993 KR 931397
(71) Applicant: SAMSUNG ELECTRONICS CO., LTD., Suwon-city, Kyungki-do 441-373 (KR)
(72) Inventor: Jung, Deok Ki, Kwachun, Kyungki-do (KR); Choi, Donguk, Changan-ku, Suwon, Kyungi-do (KR)
(74) Representative: Kensett, John Hinton

(57) **Abstract**

A liquid crystal display (LCD) is provided with colour filters (3,4,5) arranged on a glass substrate (1) in a manner which overcomes the problem of foliation between an organic transparent resin film and an inorganic conductive electrode film. The resultant structure also reduces the likelihood of short circuits and pollution common in conventional devices. This is achieved by forming an intermediate film (7) between the organic transparent resin film (6) and the inorganic transparent conductive electrode (8) film. A transparent intermediate film is selected having good adhesive properties with both the transparent resin film and the conductive film, the conductive film being formed on the intermediate film. The intermediate film is made of a material which is not easily damaged by ion-impact as may occur during deposition of the conductive film on the intermediate film. The intermediate film may be made of such film material as silicon nitride or silicon dioxide.

## Description

The present invention relates to color filters for a liquid crystal display. More particularly, the present invention relates to color filters having an improved construction whereby a transparent organic resin film and an inorganic conductive film are formed in a manner which prevents foliation and pollution thereof. The resultant structure includes an intermediate film provided between the transparent organic resin film and the inorganic conductive film which together planarize and protect the surfaces of color filters.

With a growing spread of office automation machinery and portable small-sized televisions, much research is recently been devoted to such technologies as liquid crystal displays (LCD), electroluminescence (EL) devices, plasma display panels (PDP), and vacuum fluorescence displays (VFD). Early technologies such cathode ray tubes (CRT) are slowly being replaced with the newer technologies.

Liquid crystal displays (LCDs) are particularly popular because they are light weight, are thinly manufactured and at a low cost, and have low power consumption. LCDs are widely used in displays for vehicle loading and color television imaging devices, as well as for lap top computers and pocket computers.

Color LCDs are equally as powerful display mediums as are CRT's. Color LCDs are formed by active matrix LCD techniques in which semiconductor fabrication processes are used to form liquid crystal technology.

In an active matrix LCD, thin film transistors constituting switching elements are associated respectively with hundreds and thousands of pixels arranged along a matrix. Each TFT operates as a switching element coupled to address wiring for selecting respective pixels and applying a voltage thereto. The thin film transistors form a liquid crystal display element and are made using an amorphous silicon or polycrystalline silicon material.

Amorphous silicon provides stable adhesion onto a broad transparent glass substrate and is therefore preferred. An array of thin film transistors formed with amorphous silicon can result in a high picture quality liquid crystal display.

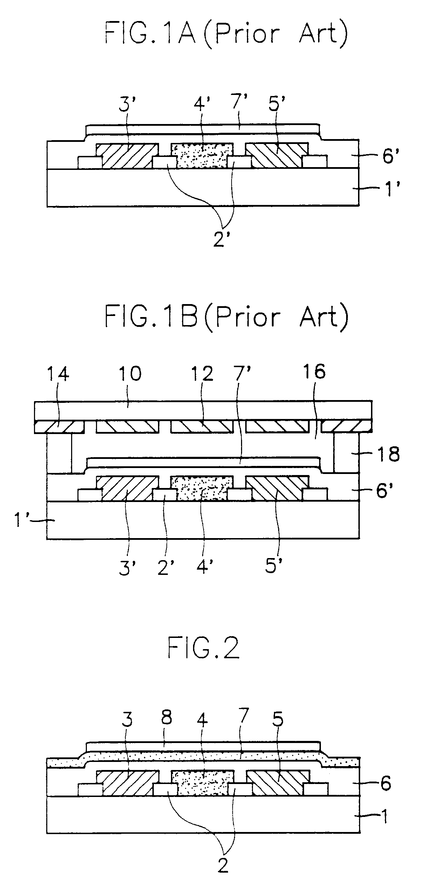

The method of making conventional color filters in connection with the manufacture of an upper substrate having color filter layers will be described in detail with reference to FIG. 1A.

FIG. 1A shows a sectional view of the structure of conventional color filters for a liquid crystal display. As illustrated in FIG. 1A, a chromium film capable of blocking light is formed over a glass substrate 1' of a liquid crystal display element which has been treated by processes such as cutting and polishing.

A photoresist layer is subsequently coated over the chromium film and exposed to light. After the deposited chromium film is then etched and patterned to define a plurality of cells, a black matrix 2' is then formed, having a characteristic low ratio of transparency, and patterned in accordance with the etch pattern.

A material having a select pigment scattered therein to optimize red spectroscopic properties is applied on the transparent glass substrate 1' and on portions of black matrix 2'. The result is a colored acrylic photosensitive resin layer formed over select portions of glass substrate 1' and the matrix pattern defined by black matrix 2'.

This colored resin material is soft-baked for ninety seconds in a hot plate between 80°C to 110°C. After soft-baking, a transparent resin film such as an anti-oxidation film is applied over the colored resin layer and dried in order to avoid oxidation prior to exposure to light.

The resultant surface area is then exposed to ultraviolet rays. The resin film, impervious to oxygen, is foliated by deionized water for five minutes and the colored photoresist layer is developed using a developer for two or three minutes. Finally, the colored photoresist layer is rinsed with deionized water for ninety seconds and post-baked in a bake oven at 220°C for thirty minutes to form a first color filter layer (red pattern 3') having optimum red spectroscopic properties.

In the same manner as described above in connection with first color filter layer 3', a second color filter layer 4' is formed using a colored acrylic photosensitive resin layer having optimum green spectroscopic properties. Second color filter layer 4' is also formed on glass substrate 1' and at a predetermined distance from first color filter layer 3'.

Subsequently, a third color filter layer 5' having optimum blue spectroscopic properties is formed on glass substrate 1' and at a distance from second color filter layer 4'.

To protect black matrix 2' and color filter layers 3', 4', 5' from damage (such as may result when indium tin oxide (ITO) is deposited by Ar sputtering, or wet-etched, to form an element electrode pattern), a transparent resin layer made of acrylic, polyimide, polyacrylate, or polyurethane having high surface solidity and excellent photo-transmittivity is formed to a thickness of 1.5µm - 3µm. The surface is then soft-baked for an hour in a bake oven at 200°C to form a protective film 6'.

The upper substrate is completed after formation of a transparent electrode layer 7' formed, for example, from an ITO material, onto which a liquid crystal driving voltage is to be applied. Transparent electrode layer 7' is formed over protective film 6' to a thickness of 500 - 1300 angstroms.

The upper substrate 1' is joined to a lower thin film transistor substrate ("TFT substrate") 10 by adhesive, which is depicted in detail in FIG. 1B.

FIG. 1B illustrates how thin film transistors (TFTs) 12 may be formed as switching elements in a matrix. Lower substrate 10 has driving electrodes 14 driving the thin film transistors. This lower substrate 10 is joined with upper glass substrate 1' and provided with a liquid crystal layer 16 interposed therebetween. The lower substrate 10 and upper glass substrate 1' are joined to each other by applying adhesive 18 to their respective edges. This adhesive 18 is applied directly to the protective film 6' or ITO film 7' formed during the steps for forming the color filters 3', 4' and 5'.

When color filters are conventionally formed as described above, because transparent electrode layer 7' is applied to protective film 6' made of an organic transparent resin, the transparent resin material of protective film 6' is subject to erosion by ion impact which may characteristically result from the excited ITO ion species during the Ar (or ion) sputtering. Under such an erosion condition, transparent electrode film 7' may combine with transparent resin film 6'. As a result, transparent electrode film 7', which serves as a signal electrode, will become uneven and polluted with the potential for short circuits (fractures in the ITO film) being formed which would adversely impact image quality.

In addition, because protective film 6', made of an organic transparent resin, does not characteristically adhere well to the inorganic transparent electrode film 7', the result is greater likelihood of foliation which can significantly reduce quality and reliability of a color filter region.

Accordingly, the object of the present invention is to provide color filters for a liquid crystal display which overcome the problem of foliation between an organic transparent resin film and a conductive electrode film, as well as to reduce the likelihood of short circuits and pollution common in conventional devices. This is achieved by forming an intermediate film between the organic transparent resin film and the inorganic transparent conductive electrode film.

The color filters in the liquid crystal display element formed in accordance with the present invention include:
a glass substrate;
a matrix defining a plurality of adjacent cells formed on the glass substrate, a pattern of said matrix being such that each cell is spaced a predetermined distance away from corresponding adjacent cells;
a plurality of colour filter layers including first, second and third colour filter layers serially arranged and separated respectively by adjacent cells in said matrix;
a transparent resin film formed over exposed portions of said matrix and over said plurality of colour filter layers to planarize and protect the surface thereunder;
a transparent intermediate film formed on the transparent resin film; and
a conductive film formed on the intermediate film.

The intermediate film is selected so as to provide good adhesion with the transparent resin film and the conductive film, as well as on the basis of such characteristic properties as high photo-transmittivity and solidity so as not to be easily damaged by ion-impact when the conductive film is deposited, by sputtering, on the intermediate film.

While silicon nitride Si₃N₄ and silicon dioxide SiO₂ are good materials for use as the intermediate film, silicon nitride is superior.

The formation of an intermediate film in the manner described above in accordance with the present invention, prevents foliation and contamination of the transparent conductive film and thus eliminates the possibility of the transparent conductive film opening up.

Embodiments of the present invention will now be described, by way of example only, with reference to the accompanying drawings, in which;
FIG. 1A shows a partial sectional view of conventional color filters for a liquid crystal display;
FIG. 1B shows a sectional view of conventional color filters in a liquid crystal display including driving electrodes, lower substrate material and a liquid crystal layer; and
FIG. 2 shows a sectional view of color filters in a liquid crystal display in accordance with the present invention.

The presently preferred embodiments will now be described with reference to the accompanying drawings.

FIG. 2 depicts a sectional view of color filters formed in a liquid crystal display element in accordance with the present invention. As illustrated in FIG. 2, the color filters portion of a liquid crystal display of the present invention, includes a black matrix 2 defining a plurality of pixels, these pixels are formed at predetermined distances apart and have a predetermined optimal width selected to avoid degradation of thin film transistor regions respectively associated therewith. Pixels are formed of TFT and ITO pixel electrodes.

As shown in Figure 2, first, second and third color filter layers 3, 4, 5, respectively, are serially formed to be separated by adjacent cells in black matrix 2. Transparent resin film 6, which serves as a protective film, is then formed over black matrix 2 and color filter layers 3, 4, 5 to planarize and protect the color filter layers. An intermediate film 7 is subsequently formed on transparent resin film 6 and a transparent electrode film 8, made from a material such as ITO, is formed on intermediate film 7.

The manufacture of the above described color filter layers will now be fully described.

A metal photoresist film 2, formed for example from chromium, is deposited on a glass substrate 1 by sputtering or by an electron-beam evaporation method. The resultant positive photoresist film is coated and soft-baked and then exposed to light for development and formation of a photosensitive pattern.

Subsequently, the chromium photoresist film is wet-etched in accordance with a selected pattern, then stripped, to form black matrix 2. The chromium film should normally be applied to a thickness of 500 to 1500 angstroms.

A red photoresist film is then coated on selected black matrix 2 to a thickness of 1 to 2 µm and then soft-baked to achieve wanted spectroscopic properties. Following coating with a transparent resin film of polyvinyl acetate, or polyvinyl alcohol to a thickness of 0.5 to 1µm to avoid oxidation, the resultant surface is soft-baked and exposed to light. The resin film for antioxidation is removed and the colored photoresist film is developed and hardened to form a red filter pattern 3.

Subsequently, green and blue filter layers 4, 5 are formed substantially in the same manner, and a transparent resin film 6, serving as a protective film and made for example from a polyimide, a polyacrylate, or a polyurethane, is coated to a thickness of 1 to 2.5 µm over black matrix 2 and color filter layers 3, 4, 5, and heated in a bake oven at 200°C for an hour.

Ammonia and silane gas are then resolved at 130°C to 250°C by a plasma chemical vapor deposition method. An intermediate film 7 of for example silicon nitride film is formed to a thickness of 300 to 700 angstroms on transparent resin film 6. In turn, a transparent electrode film 8 made from indium tin oxide is formed to a thickness of 500 to 2500 angstroms on the transparent resin film 6 by sputtering. To remove unwanted grown surface components, a photosensitive material is applied to the electrode film 8 and the electrode film 8 is exposed to light and wet-etched. In this manner, a complete set of color filter layers can be appropriately formed.

As explained above in connection with conventional devices, because a transparent electrode film (normally an inorganic film layer) is formed on a transparent resin film (an organic film layer), the organic transparent resin film is eroded by ion impact. This is because when the transparent electrode film is formed on the resin film by sputtering, the resin film is damaged by excited electrode film ions. As a result, the inorganic transparent electrode film is more likely to adhere into the transparent resin film.

The presence of an intermediate film 7 in the present invention, made from for example silicon nitride, is formed between the organic transparent resin film 6 and the inorganic transparent electrode film 8 and found to prevent deterioration of LCD image quality that would otherwise result from unevenness or pollution of the overlying transparent electrode film. The use of an intermediate film 7 also solves the problem of foliation, common in conventional LCD elements and caused by the poor chemical affinity between adjacent organic and inorganic film layers used in those devices.

When intermediate film 7 is a silicon nitride film layer, its thickness should not exceed 700 angstroms when the thickness of transparent conductive film 8 (an ITO film) is 500 to 2500 angstroms. This is because the silicon nitride film layer and the ITO film are susceptible to fracture during thermal treatment normally performed following the deposition of the ITO film. This heat treatment subjects the silicon nitride film layer to extreme thermal stress.

Conversely, when the silicon nitride film is provided with a thickness of less than 300 angstroms, its intended blocking properties are overly degraded. A thickness of less than 300 angstroms is thus not recommended. The ideal thickness of a silicon nitride intermediate film layer is in the range of 300 to 700 angstroms; provided that the ITO film is provided with a thickness in the 500 to 2500 angstrom range.

The optimum thickness of a silicon nitride intermediate film layer will also vary with the type of transparent resin film selected to be coupled therewith.

Intermediate film 7 should be formed of a material providing good adhesion with both resin film 6 and conductive film 8. This material should provide high photo-transmittivity and solidity so as not to be easily damaged by ion-impact such as may result when conductive film 8 is deposited (by sputtering) thereon.

As an alternative to silicon nitride film Si₃N₄ as the intermediate film layer of choice, silicon dioxide SiO₂ can be substituted therefor; although silicon nitride is superior.

In the present invention, intermediate film 7 is disclosed as being formed between transparent resin film 6 and transparent electrode film 8 so as to overcome the problem of foliation resulting from the poor chemical affinity between an organic resin film and an inorganic conductive film.

The thickness of intermediate film 7 is disclosed as being important and also optimally selected on the basis of the thickness of the conductive film so as not to adversely influence the spectroscopic properties of the resulting color filter layers in the LCD.

Intermediate film 7 thus avoids the problems otherwise associated with combination of particles between transparent resin film 6 and transparent conductive film 8.

While this invention has been described in connection with what is presently considered to be the most practical and preferred embodiments, it is to be understood that the invention is not limited to the disclosed embodiments, but, on the contrary, it is intended to cover various modifications and equivalent arrangements included within the spirit and scope of the appended claims.

## Claims

1. A colour filter in a liquid crystal display comprising; a glass substrate (1); a matrix (2) defining a plurality of adjacent cells formed on the glass substrate, a pattern of said matrix being such that each cell is spaced a predetermined distance away from corresponding adjacent cells; a plurality of colour filter layers (3,4,5) including first (3), second (4) and third (5) colour filter layers serially arranged and separated respectively by adjacent cells in said matrix; a transparent resin film (6) formed over exposed portions of said matrix and over said plurality of colour filter layers to planarize and protect the surface thereunder; a transparent intermediate film (7) formed on the transparent resin film; and a conductive film (8) formed on the intermediate film.

2. A colour filter as claimed in Claim 1, wherein the thickness of said intermediate film is determined on the basis of the type of resin material included in the transparent resin film.

3. A colour filter as claimed in Claim 1 or Claim 2, wherein said intermediate film is silicon nitride or silicon dioxide.

4. A colour filter as claimed in Claim 3, wherein said intermediate film is silicon nitride having a thickness in the range of approximately 300 to 700 angstroms when the thickness of said conductive film is in the range of approximately 500 to 2500 angstroms.

5. A colour filter in a liquid crystal display comprising; a glass substrate (1); light-intercepting members (2) formed at predetermined intervals along said glass substrate and at a predetermined distance apart; first, second and third colour filter layers (3,4,5) serially arranged to be separated from each other by said light-intercepting members; a transparent resin film (6) formed on said light-intercepting members and colour filter layers for planarizing and protecting the surface thereunder; and a transparent intermediate film (7) formed of a material having good adhesion with said transparent resin film and with a conductive film (8) formed on said transparent intermediate film

6. A colour filter as claimed in Claim 5, wherein the thickness of said intermediate film is determined on the basis of the type of resin material included in the transparent resin film.

7. A colour filter as claimed in Claim 5 or Claim 6, wherein said intermediate film is silicon nitride or silicon dioxide.

8. A colour filter as claimed in Claim 7, wherein said intermediate film is silicon nitride having a thickness in the range of approximately 300 to 700 angstroms when the thickness of said conductive film is in the range of approximately 500 to 2500 angstroms.
